# EUROPÄISCHE PATENTSCHRIFT

(11) **EP 2 016 018 B1**
(45) Veröffentlichungstag und Bekanntmachung des Hinweises auf die Patenterteilung: **25.05.2011**
(21) Anmeldenummer: 07728126.9
(22) Anmeldetag: 16.04.2007
(51) Int. Cl.: B66F 9/075, B60K 7/00, B60K 17/04

(54) **ANTRIEB FÜR EIN FLURFÖRDERZEUG**
DRIVE UNIT FOR AN INDUSTRIAL TRUCK
MÉCANISME D'ENTRAÎNEMENT POUR CHARIOT DE MANUTENTION

(30) Priorität: 10.05.2006 DE 102006021680
(43) Veröffentlichungstag der Anmeldung: 21.01.2009
(73) Patentinhaber: ZF Friedrichshafen AG, 88038 Friedrichshafen (DE)
(72) Erfinder: STÜBNER, Frank, 99894 Ernstroda (DE); STÜRBER, Philipp, 99947 Wiegleben (DE); BALD, Dirk, 99867 Gotha (DE)
(86) Internationale Anmeldenummer: PCT/EP2007/053661
(87) Internationale Veröffentlichungsnummer: WO 2007/128650

(56) Entgegenhaltungen:
- EP-A1- 1 285 803
- DE-A1- 10 132 318
- DE-A1- 10 334 938
- DE-U1-202005 020 620

## Beschreibung

Die Erfindung bezieht sich auf einen Antrieb für ein Flurförderzeug nach der im Oberbegriff von Anspruch 1 näher definierten Art.

Antriebe für Flurförderzeuge weisen ein Stirnradgetriebe und ein Kegelradgetriebe auf, wobei das Tellerrad des Kegelradgetriebes mit dem Antriebsrad des Flurförderzeuges in Verbindung steht. Das Antriebsrad des Flurförderzeuges ist unterhalb der Drehachse des elektrischen Antriebsmotors angeordnet, um einen möglichst geringen Hüllkreis bei der Lenkbewegung des Antriebs zu benötigen. Zwischen der Lauffläche des Antriebsrades und dem Stirnradgetriebe ist eine Gehäusewand des Gehäuses angeordnet.

Die DE 101 32 318 A1 und die EP 1 285 803 A1 offenbaren einen Antrieb für ein Flurförderzeug mit einem Stirnradgetriebe und einem Kegelradgetriebe, bei welchem das Getriebegehäuse über die Drehachse des Tellerrades mit Schmiermittel gefüllt sein muß, damit die Lagerung des Ritzels des Kegelradgetriebes und das Stirnradgetriebe ausreichend mit Schmiermittel versorgt werden. Da der restliche verbleibende, nicht mit Schmiermittel befüllte Getriebegehäuseraum gering ist, benötigt der Antrieb einen Entlüfter, um keinen unzulässig hohen Druck im Getriebegehäuse aufzubauen. Der hohe Ölstand führt zu hohen Panschverlusten der rotierenden Teile und damit zu einem geringen Wirkungsgrad des Getriebes.

Der vorliegenden Erfindung liegt die Aufgabe zugrunde, einen Antrieb für ein Flurförderzeug zu schaffen, welcher ohne zusätzliche Entlüftung des Getriebegehäuses auskommt, eine Verbesserung des Wirkungsgrades des Getriebes erreicht und gleichzeitig kostengünstig ist.

Die Aufgabe wird mit einem, auch die kennzeichnenden Merkmale des Hauptanspruchs aufweisenden, gattungsgemäßen Antrieb gelöst.

Erfindungsgemäß weist der Antrieb ein Getriebegehäuse mit einer Getriebegehäusewandung auf, welche eine Öffnung zur Verbindung des Stirnradgetriebes mit dem Kegelradgetriebe aufweist. Diese Gehäusewandung ist im eingebauten Zustand des Antriebs nahezu horizontal angeordnet, so dass diese Gehäusewand so ausgebildet werden kann, dass im Stillstand des Antriebs ein Teil des Schmiermittels auf der Oberfläche dieser Gehäusewand im Inneren des Getriebegehäuses zurückbehalten werden kann. Mindestens ein Stirnrad ist so ausgebildet, dass es in dieses zurückgehaltene Schmiermittel eintaucht, wodurch beim Anfahren des Antriebs und somit Drehung des Stirnrades dieses Schmiermittel im Bereich des Stirnradgetriebes aufgewirbelt und somit in diesem Gehäuseteil verteilt wird, um das Stirnradgetriebe und die Lagerung zu schmieren. Das nicht zurückgehaltene Schmiermittel befindet sich im Bereich des Kegelradgetriebes vorzugsweise unterhalb der Drehachse des Kegelradgetriebes, wodurch eine deutlich geringere Menge an Schmiermittel für den Antrieb benötigt wird. Ein Kanal außerhalb der Ritzellagerung des Kegelradgetriebes wird verwendet, um Schmiermittel, welches durch Drehung des Tellerrades in Richtung des Stirnradgetriebes geschleudert wird, in den oberen Getriebegehäuseraum zu leiten, in welchem sich das Stirnradgetriebe befindet. Von dort besteht die Möglichkeit, dass das Schmiermittel durch die Ritzellagerung wieder in den Getriebegehäuseraum, in welchem sich das Tellerrad befindet, zurückfließt. Dadurch ist es möglich, das Schmiermittelniveau bzw. die Schmiermittelmenge so zu bemessen, dass das Schmiermittelniveau unterhalb der Drehachse des Tellerrades angeordnet ist, wodurch der verbleibende Raum im Getriebegehäuse ausreichend groß ist, wodurch bei Erwärmung des Schmiermittels auch ohne Entlüfter kein unzulässig hoher Druck im Getriebegehäuse entsteht. Somit kann auf einen Entlüfter verzichtet werden. Gleichzeitig wird der Getriebewirkungsgrad deutlich verbessert, da die Panschverluste reduziert werden.

In einer weiteren Ausgestaltungsform ist im Bereich des Tellerrades eine Fördereinrichtung angeordnet, welche sich ebenfalls um die Drehachse des Tellerrades dreht und das Tellerrad bei der Förderung von Schmiermitteln zum Stirnradgetriebe unterstützt.

In einer weiteren Ausgestaltungsform weist das Getriebegehäuse im Bereich des Stirnradgetriebes einen Damm auf, welcher die Aufgabe hat, ausreichend Schmiermittel im Bereich des Stirnradgetriebes zurückzuhalten und bei Überschreiten eines bestimmten Schmiermittelniveaus im Bereich des Stirnradgetriebes im Sinne eines Überlaufs dieses Schmiermittel zurück zum Kegelradgetriebe abzuführen.

In einer weiteren Ausgestaltungsform weist dieser Damm eine Ausnehmung auf, wodurch das überlaufende Schmiermittel gezielt zur Lagerung des Ritzels geführt wird.

Weitere Merkmale sind der Figuren-Beschreibung zu entnehmen.
Es zeigen:
- Fig. 1: einen Schnitt durch den Antrieb und

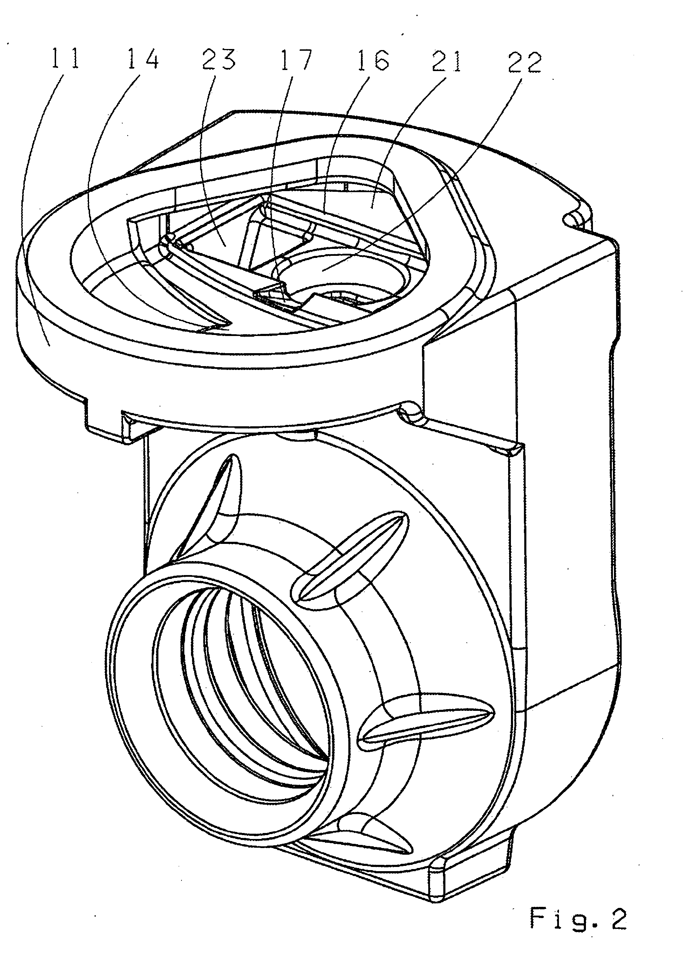

- Fig. 2: eine räumliche Darstellung des Getriebegehäuses.

Fig. 1:
Eine Welle 1 eines elektrischen Antriebsmotors 2 treibt ein erstes Stirnrad 3 an. Das erste Stirnrad 3 ist in Wirkverbindung mit dem zweiten Stirnrad 4 des Stirnradgetriebes 5. Ein Ritzel 6 eines Kegelradgetriebes 7 ist in drehfester Verbindung mit dem zweiten Stirnrad 4. Das Ritzel 6 ist in Wirkverbindung mit einem Tellerrad 8, welches eine Abtriebswelle 9 antreibt. Die Abtriebswelle 9 ist in drehfester Verbindung mit einem Fahrzeugrad 10. Das Getriebegehäuse 11 weist eine Gehäusewand 12 auf, welche das Stirnradgetriebe 5 vom Kegelradgetriebe 7 trennt. Die Gehäusewand 12 weist eine Öffnung 13 auf, durch welche das Ritzel 6 mit dem zweiten Stirnrad 4 verbunden ist. Die Gehäusewand 12 ist so ausgestaltet, dass nicht das gesamte Schmiermittel zum Kegelradgetriebe 7 abläuft, sondern Schmiermittel im Bereich des Stirnradgetriebes 5 verbleibt. Hierzu weist die Gehäusewand 12 im Bereich des ersten Stirnrades 3 eine Vertiefung 14 auf, welche tiefer als der Ablauf zur Öffnung 13 ist. Das Stirnrad 3 ist so ausgebildet, dass die Verzahnung 15 in das zurückgehaltene Schmiermittel ragt, wodurch bei Drehung des ersten Stirnrades 3 das Schmiermittel aus der Vertiefung 14 weggeschleudert und dadurch das Stirnradgetriebe 5 geschmiert wird. Die Gehäusewand 12 weist einen Damm 16 auf, welcher ebenfalls Schmiermittel auf der Gehäusewand 12 ansammelt. Der Damm 16 weist eine Ausnehmung 17 auf, über welche das überlaufende Schmiermittel gezielt zur Lagerung 18 geführt wird. Das Tellerrad 8 dreht sich um die Drehachse 19 und ist drehfest mit einer Fördereinrichtung 20 verbunden, welche sich ebenfalls um die Drehachse 19 dreht. Das Tellerrad 8 und die Fördereinrichtung 20 fördern Schmiermittel über einen nicht gezeigten Kanal, welcher gegenüber dem Kanal 23 liegt, sich aber außerhalb der Lagerung 18 befindet, zum Stirnradgetriebe 5, wodurch sich das Schmiermittel im Stirnradgetriebe 5 verteilt und anschließend über die Ausnehmung 17 zurück zu Lagerung 18 und von dort zum Tellerrad 8 zurückfließt. Im Stillstand befindet sich ein Teil des Schmiermittels auf der Gehäusewand 12 und ein weiterer Teil im Bereich des Tellerrades 8, vorzugsweise unterhalb der Drehachse 19. Bei Montage und Erstbefüllung des Antriebs wird das Schmiermittel in das Getriebegehäuse gefüllt, bevor der elektrische Antriebsmotor 2 montiert ist. Bei Verwendung einer Schmiermittelfüllung, welche über die gesamte Lebensdauer des Antriebs im Getriebegehäuse verbleibt, wird das Schmiermittel, bevor die Antriebswelle 1 eingesetzt wird, in das Getriebegehäuse 11 gefüllt, wobei das Getriebegehäuse 11 keinen Entlüfter und keine Ablaßschraube mehr aufweist.

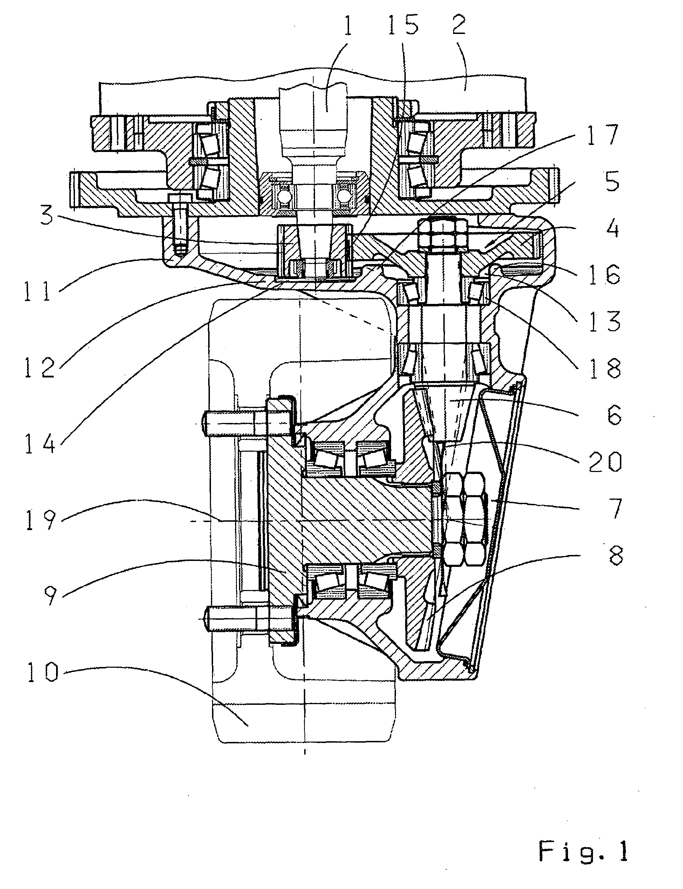

Fig. 2:
Das Getriebegehäuse 11 weist einen Damm 16 auf, welcher Schmiermittel auf der Oberfläche 21 der Gehäusewand 12 im Sinne eines Überlaufs zurückhält. Zusätzlich weist die Oberfläche 21 eine Vertiefung 14 auf, in welcher das erste Stirnrad 3 der Fig. 1 angeordnet sein kann. Der Damm 16 weist eine Ausnehmung 17 auf, über welche überschüssiges Schmiermittel auf der Oberfläche 21 in die Aufnahme 22 der Lagerung 18 der Fig. 1 ablaufen kann. Über den Kanal 23 und den nicht gezeigten Kanal kann das Tellerrad 8 der Fig. 1 Schmiermittel auf die Oberfläche 21 transportieren.

### Bezugszeichen

- 1: Welle
- 2: Antriebsmotor
- 3: erstes Stirnrad
- 4: zweites Stirnrad
- 5: Stirnradgetriebe
- 6: Ritzel
- 7: Kegelradgetriebe
- 8: Tellerrad
- 9: Abtriebswelle
- 10: Fahrzeugrad
- 11: Getriebegehäuse
- 12: Gehäusewand
- 13: Öffnung
- 14: Vertiefung
- 15: Verzahnung
- 16: Damm
- 17: Ausnehmung
- 18: Lagerung
- 19: Drehachse
- 20: Fördereinrichtung
- 21: Oberfläche
- 22: Aufnahme
- 23: Kanal

## Patentansprüche

1. Antrieb für ein Flurförderzeug mit einem Stirnradgetriebe (5) mit einem ersten Stirnrad (3) und einem zweiten Stirnrad (4) und einem Kegelradgetriebe (7) mit einem Ritzel (6) und einem Tellerrad (8), wobei das Ritzel (6) und das zweite Stirnrad (4) um eine Drehachse drehbar angeordnet sind, wobei das zweite Stirnrad (4) das Ritzel (6) antreibt, mit einem Gehäuse (11) mit einer Gehäusewand (12), wobei innerhalb des Gehäuses das Stirnradgetriebe und das Kegelradgetriebe und Schmiermittel angeordnet sind und die Gehäusewand (12) eine Öffnung (13) aufweist, durch welche das Ritzel (6) mit dem zweiten Stirnrad (4) verbunden ist, **dadurch gekennzeichnet, dass** die Gehäusewand (12) und wenigstens ein Stirnrad (3, 4) so ausgebildet sind, dass bei Stillstand des Stirnrades (3, 4) Schmiermittel auf der Oberfläche dieser Gehäusewand (12) innerhalb des Gehäuses (11) zurückgehalten wird und ein Teil des Stirnrades (3, 4) in dieses Schmiermittel eintaucht.

2. Antrieb nach Anspruch 1, **dadurch gekennzeichnet, dass** die Gehäusewand (12) mindestens eine weitere Öffnung aufweist, in welche mindestens ein Kanal (23) mündet, durch welche bei Drehung des Tellerrades (8) Schmiermittel vom Tellerrad (8) zum Stirnradgetriebe (5) gefördert wird.

3. Antrieb nach Anspruch 2, **dadurch gekennzeichnet, dass** am Tellerrad (8) eine Fördereinrichtung (20) angeordnet ist, so dass bei Drehung des Tellerrades (8) Schmiermittel zum Stirnradgetriebe (5) gefördert wird.

4. Antrieb nach Anspruch 1, **dadurch gekennzeichnet, dass** der Antrieb mit so viel Schmiermittel befüllt ist, dass das Schmiermittelniveau unterhalb der Drehachse (19) des Tellerrades (8) angeordnet ist.

5. Antrieb nach Anspruch 1, **dadurch gekennzeichnet, dass** die Gehäusewand (12) einen umlaufenden Damm (16) aufweist, welcher im Sinne eines Überlaufs überschüssiges Schmiermittel abführt.

6. Antrieb nach Anspruch 5, **dadurch gekennzeichnet, dass** der Damm (16) eine Ausnehmung (17) aufweist, welche das den Damm (16) überschreitende Schmiermittel zu einer Lagerung (18) des Ritzels (6) leitet.

7. Antrieb nach Anspruch 1, **dadurch gekennzeichnet, dass** das erste Stirnrad (3) mit einer Abtriebswelle (1) eines Elektromotors (2) verbindbar ist.

8. Antrieb nach Anspruch 7, **dadurch gekennzeichnet, dass** der Antrieb mit Schmiermittel vor Montage des Elektromotors (2) im Bereich des ersten Stirnrades (3) befüllt ist.

9. Antrieb nach Anspruch 1, **dadurch gekennzeichnet, dass** die Gehäusewand (12) im eingebauten Zustand des Antriebs nahezu horizontal angeordnet ist.

10. Antrieb nach Anspruch 2, **dadurch gekennzeichnet, dass** ein weiterer Kanal vorhanden ist, über welchen ebenfalls Schmiermittel zum Stirnradgetriebe gefördert wird, wobei der weitere Kanal gegenüber dem ersten Kanal außerhalb der Lagerung (18) angeordnet ist.

## Claims

1. Drive for an industrial truck with a spur gear transmission (5) with a first spur gear (3) and a second spur gear (4) and a bevel gear transmission (7) with a pinion (6) and a ring gear (8), the pinion (6) and the second spur gear (4) being arranged so as to be capable of rotating about an axis of rotation, the second spur gear (4) driving the pinion (6), with a housing (11) with a housing wall (12), the spur gear transmission and the bevel gear transmission and lubricant being arranged within the housing, and the housing wall (12) having an opening (13), through which the pinion (6) is connected to the second spur gear (4), **characterized in that** the housing wall (12) and at least one spur gear (3, 4) are designed in such a way that, when the spur gear (3, 4) is at a standstill, lubricant is retained on the surface of this housing wall (12) within the housing (11) and part of the spur gear (3, 4) dips into this lubricant.

2. Drive according to Claim 1, **characterized in that** the housing wall (12) has at least one further opening, into which at least one channel (23) opens out, with lubricant being delivered from the ring gear (8) to the spur gear transmission (5) through said channel when the ring gear (8) rotates.

3. Drive according to Claim 2, **characterized in that** a delivery device (20) is arranged on the ring gear (8), with the result that lubricant is delivered to the spur gear transmission (5) when the ring gear (8) rotates.

4. Drive according to Claim 1, **characterized in that** the amount of lubricant introduced into the drive is such that the lubricant level is arranged below the axis of rotation (19) of the ring gear (8).

5. Drive according to Claim 1, **characterized in that** the housing wall (12) has a peripheral dam (16), which discharges excess lubricant in the manner of an overflow.

6. Drive according to Claim 5, **characterized in that** the dam (16) has a cutout (17), which guides the lubricant crossing the dam (16) to a bearing arrangement (18) of the pinion (6).

7. Drive according to Claim 1, **characterized in that** the first spur gear (3) can be connected to a drive shaft (1) of an electric motor (2).

8. Drive according to Claim 7, **characterized in that** the drive is filled with lubricant prior to fitting of the electric motor (2) in the region of the first spur gear (3).

9. Drive according to Claim 1, **characterized in that** the housing wall (12), in the installed state of the drive, is arranged virtually horizontally with respect thereto.

10. Drive according to Claim 2, **characterized in that** a further channel is provided, via which lubricant is likewise delivered to the spur gear transmission, the further channel being arranged opposite the first channel outside the bearing arrangement (18).

## Revendications

1. Entraînement pour un chariot de manutention, comprenant un engrenage à pignons droits (5) avec un premier pignon droit (3) et un deuxième pignon droit (4) et un engrenage à pignons coniques (7) avec un pignon (6) et une couronne (8), le pignon (6) et le deuxième pignon droit (4) étant disposés de manière à pouvoir tourner autour d'un axe de rotation, le deuxième pignon droit (4) entraînant le pignon (6), comprenant un boîtier (11) avec une paroi de boîtier (12), l'engrenage à pignons droits et l'engrenage à pignons coniques ainsi que du lubrifiant étant disposés à l'intérieur du boîtier, et la paroi du boîtier (12) présentant une ouverture (13), à travers laquelle le pignon (6) est connecté au deuxième pignon droit (4), **caractérisé en ce que** la paroi de boîtier (12) et au moins un pignon droit (3, 4) sont réalisés de telle sorte qu'à l'arrêt du pignon droit (3, 4), du lubrifiant soit retenu sur la surface de cette paroi du boîtier (12) à l'intérieur du boîtier (11) et qu'une partie du pignon droit (3, 4) plonge dans ce lubrifiant.

2. Entraînement selon la revendication 1, **caractérisé en ce que** la paroi du boîtier (12) présente au moins une ouverture supplémentaire, dans laquelle débouche au moins un canal (23), à travers lequel, lors de la rotation de la couronne (8), du lubrifiant est refoulé de la couronne (8) vers l'engrenage à pignons droits (5).

3. Entraînement selon la revendication 2, **caractérisé en ce qu'**un dispositif de refoulement (20) est disposé sur la couronne (8), de sorte que lors de la rotation de la couronne (8), du lubrifiant soit refoulé vers l'engrenage à pignons droits (5).

4. Entraînement selon la revendication 1, **caractérisé en ce que** l'entraînement est rempli de lubrifiant dans une mesure telle que le niveau de lubrifiant soit en dessous de l'axe de rotation (19) de la couronne (8).

5. Entraînement selon la revendication 1, **caractérisé en ce que** la paroi du boîtier (12) présente une digue périphérique (16) qui évacue le lubrifiant en excès à la manière d'un trop-plein.

6. Entraînement selon la revendication 5, **caractérisé en ce que** la digue (16) présente un évidement (17) qui conduit le lubrifiant débordant de la digue (16) vers un support sur palier (18) du pignon (6).

7. Entraînement selon la revendication 1, **caractérisé en ce que** le premier pignon droit (3) peut être connecté à un arbre d'entraînement (1) d'un moteur électrique (2).

8. Entraînement selon la revendication 7, **caractérisé en ce que** l'entraînement est rempli de lubrifiant avant le montage du moteur électrique (2) dans la région du premier pignon droit (3).

9. Entraînement selon la revendication 1, **caractérisé en ce que** la paroi du boîtier (12) est disposée pratiquement horizontalement dans l'état monté de l'entraînement.

10. Entraînement selon la revendication 2, **caractérisé en ce qu'**il est prévu un canal supplémentaire par le biais duquel du lubrifiant est également refoulé vers l'engrenage à pignons droits, le canal supplémentaire étant disposé en dehors du support sur palier (18) par rapport au premier canal.
